# FASCICULE DE BREVET EUROPEEN

(11) **EP 2 930 606 B1**
(45) Date de publication et mention de la délivrance du brevet: **05.06.2019**
(21) Numéro de dépôt: 15163065.4
(22) Date de dépôt: 09.04.2015
(51) Int. Cl.: G06F 3/0488, G07F 19/00, G09B 21/00

(54) **PROCÉDÉ DE GESTION DE LA SAISIE DE DONNÉES PAR APPUIS SUR UNE SURFACE TACTILE D'UN TERMINAL ÉLECTRONIQUE, MODULE, TERMINAL, PRODUIT PROGRAMME D'ORDINATEUR ET MEDIUM DE STOCKAGE CORRESPONDANTS**
VERFAHREN ZUR STEUERUNG DER DATENERFASSUNG DURCH DRÜCKEN AUF EINE BERÜHRUNGSEMPFINDLICHE OBERFLÄCHE EINES ELEKTRONISCHEN ENDGERÄTS, ENTSPRECHENDES MODUL, ENDGERÄT, COMPUTERPROGRAMMPRODUKT UND SPEICHERMEDIUM
METHOD FOR MANAGING THE ENTRY OF DATA BY PRESSING A TOUCH-SENSITIVE SURFACE OF AN ELECTRONIC TERMINAL, CORRESPONDING MODULE, TERMINAL, COMPUTER PROGRAM PRODUCT AND STORAGE MEDIUM

(30) Priorité: 10.04.2014 FR 1453195
(43) Date de publication de la demande: 14.10.2015
(73) Titulaire: Ingenico Group, 75015 Paris (FR)
(72) Inventeur: Naccache, David, 75018 Paris (FR); Barneron, Sylvain, 26500 Bourg-les-Valence (FR); Pignal, Pierre, 2600 Valence (FR); James, Sébastien, 26000 Valence (FR)
(74) Mandataire: Vidon Brevets & Stratégie

(56) Documents cités:
- EP-A1- 2 267 581
- JP-A- 2003 016 502
- US-A1- 2007 236 474
- US-A1- 2009 303 187
- US-A1- 2011 080 369

## Description

### 1 DOMAINE DE L'INVENTION

La présente invention se rapporte au domaine des terminaux électroniques présentant un écran tactile permettant l'affichage de données (telles qu'un clavier virtuel par exemple) et la saisie de données (telles qu'un code confidentiel via un clavier virtuel par exemple) ou au domaine des claviers tactiles (par exemple un clavier capacitif).

L'invention s'applique plus particulièrement à de tels terminaux pouvant mettre en oeuvre des opérations de paiement, appelés terminaux de paiement.

Plus précisément, l'invention concerne l'amélioration de tels terminaux électroniques en vue de leur utilisation par un utilisateur présentant une déficience visuelle, par exemple un utilisateur malvoyant ou non-voyant (noté ci-après utilisateur malvoyant), ou encore l'adaptation de tels terminaux électroniques en fonction de leur utilisation.

### 2 SOLUTIONS DE L'ART ANTERIEUR

On connaît à ce jour de plus en plus de terminaux comprenant un écran tactile, comme les téléphones mobiles, les assistants numériques personnels (dits PDAs), les ordinateurs portables, les caisses enregistreuses de commerce...

Il existe également des terminaux de paiement électroniques comprenant un écran tactile. Dans ce cas, un tel écran tactile représente par exemple un clavier virtuel pour la validation d'un code confidentiel, ou le montant d'une transaction.

Un inconvénient de ces terminaux électroniques réside cependant dans le fait qu'ils ne peuvent pas être utilisés par un utilisateur malvoyant.

En effet, contrairement aux terminaux électroniques comprenant un écran et un clavier sur lequel les touches sont en relief et certaines présentent un repérage tactile en surface (notamment le digit 5, et les touches de validation, correction, ou annulation pour un clavier de terminal de paiement électronique), chaque touche d'un clavier virtuel d'un terminal électronique classique comprenant un écran tactile n'est détectable que visuellement, la face avant d'un tel terminal de paiement électronique étant parfaitement lisse.

Confrontés à cette problématique, certains fabricants ont développé des solutions consistant à appliquer un relief à la vitre (située au-dessus du clavier virtuel) formant la face avant du terminal électronique, le relief consistant par exemple à matérialiser la touche 5, classiquement située au milieu d'un clavier, par un point en saillie ou en creux.

Ainsi, lorsqu'un utilisateur malvoyant doit saisir, sur un tel terminal électronique, un code confidentiel pour valider une transaction par exemple, il cherche cet élément de relief, « à tâtons » (c'est à dire en déplaçant un doigt sur la surface tactile du terminal) afin d'identifier la touche 5 et de pouvoir ensuite, toujours par déplacement de son doigt autour de cette touche, saisir les digits composant son code confidentiel.

Un inconvénient de ces solutions réside dans le fait que la recherche de la touche 5 se faisant par déplacement sur l'écran tactile, il est fréquent qu'un appui sur cette touche (ou une autre) soit détecté du fait de la présence du doigt de l'utilisateur sur l'écran, engendrant ensuite une erreur dans la saisie du code confidentiel lorsque le digit 5 (ou un autre digit faussement validé) ne correspond effectivement pas au premier digit de ce code confidentiel.

Une amélioration de ces solutions a été proposée, consistant à ajouter une temporisation pour la détection des appuis touches, permettant ainsi de limiter le nombre de « fausses » saisies dues à la recherche de la touche 5 en relief. Ainsi, il faut que l'utilisateur laisse son doigt un certain temps au même endroit sur l'écran tactile pour qu'un appui touche soit détecté et validé. Dans le document US2009/303187, par exemple, une telle temporisation dépend du type de touche virtuelle sélectionnée.

En revanche, l'inconvénient principal de cette solution réside dans la lenteur d'utilisation d'un tel clavier, qui nécessite des appuis touches plus longs pour qu'ils soient pris en considération, rendant la saisie d'un code confidentiel nettement moins ergonomiques, en particulier pour un utilisateur non malvoyant qui n'a a priori pas besoin d'une telle temporisation de validation d'un appui.

Il existe donc un besoin pour de nouveaux terminaux comprenant un écran tactile permettant à tout utilisateur de les utiliser, y compris les utilisateurs malvoyants, sans que les utilisateurs voyants ne soient pénalisés en terme d'ergonomie.

Il existe également un besoin pour une solution optimale en terme de coût, dans un environnement concurrentiel où le prix d'un terminal est un enjeu primordial pour les fabricants.

### 3 RESUME DE L'INVENTION

L'invention concerne un procédé de gestion de la saisie de données par appuis sur une surface tactile d'un terminal électronique, le procédé mettant en oeuvre au moins une temporisation visant à ne valider un appui que si la durée de cet appui dépasse un seuil prédéterminé, dite temporisation de validation d'appui.

Selon l'invention, le procédé comprend les étapes suivantes :
- une étape de configuration de la temporisation de validation d'appui, délivrant une temporisation de validation d'appui variable selon au moins un paramètre de variation prédéterminé ;
- une étape de gestion d'une pluralité d'appuis sur la surface tactile du terminal électronique en tenant compte de la temporisation de validation d'appui variable configurée.

Ainsi, l'invention repose sur une approche nouvelle et inventive de la gestion de la saisie de données par appuis sur une surface tactile, permettant notamment d'optimiser une telle saisie dans le cas d'un utilisateur malvoyant tout en ne pénalisant pas la saisie pour un utilisateur non malvoyant, contrairement aux solutions de l'art antérieur.

Pour ce faire, le procédé selon les différents modes de réalisation de l'invention prévoit de configurer de manière variable une temporisation de validation d'un appui touche, permettant ainsi de tenir compte des spécificités de saisie d'un utilisateur malvoyant ou d'offrir à un utilisateur une ergonomie optimisée d'utilisation de son terminal.

On rappelle ici qu'une temporisation de la validation d'un appui permet de déterminer au bout de combien temps un appui sur l'écran tactile est effectivement considéré comme un appui touche, c'est-à-dire une saisie effective d'une donnée par l'utilisateur.

Ainsi, selon le critère de variation prédéterminé utilisé pour la configuration de la variabilité de la temporisation, le procédé selon les différents modes de réalisation de l'invention permet d'adapter la longueur de la temporisation pour chaque appui sur l'écran tactile, ou en fonction du type d'appui (rang d'un appui dans une série d'appuis, localisation de l'appui sur l'écran, ...). Une fois cette variabilité de la temporisation configurée, les appuis effectués par un utilisateur sur l'écran tactile sont gérés en tenant compte de ces différentes longueurs de temporisation afin d'opérer le traitement adéquat des données saisies via ces appuis.

Selon un aspect particulier de l'invention, le paramètre de variation prédéterminé appartient au groupe comprenant :
- une temporisation de validation d'appui plus longue pour le premier appui d'une série de plusieurs appuis ;
- une temporisation de validation d'appui plus longue en fonction de la localisation de l'appui sur une zone de l'écran tactile.

Ainsi, selon un premier mode de réalisation, le paramètre de variation de la temporisation peut refléter un usage spécifique du clavier virtuel pour un utilisateur malvoyant, ayant besoin de repérer, en déplaçant son doigt sur l'écran tactile, une touche particulière (le digit 5 par exemple, dans le cas où un point en relief matérialise cette touche) sans pour autant qu'un appui sur cette touche (ou sur une autre touche sur laquelle l'utilisateur fait passer son doigt) soit validé comme une saisie du digit correspondant.

Selon cet exemple particulièrement adapté à la saisie d'un code confidentiel sur un terminal de paiement électronique par un utilisateur malvoyant, on considère que la temporisation de validation du premier appui d'une série de plusieurs appuis est plus longue que la temporisation des appuis suivants. De ce fait, le temps passé par l'utilisateur à repérer la touche 5 ne sera pas pris en compte comme une saisie réelle du digit 5, s'il n'excède pas la temporisation configurée pour le premier appui.

Pour ce faire, l'utilisateur doit être informé de cette variabilité de temporisation en fonction des appuis, de façon à laisser son doigt volontairement plus longtemps sur le premier digit de son code confidentiel, de façon à valider sa saisie.

La temporisation pour le premier appui d'une série peut par exemple être fixée à 1 seconde, alors que la temporisation pour les appuis suivants peut être fixée à 0,4 seconde, durée classique et optimale d'un point de vue ergonomique pour un utilisateur. Ainsi, une fois le premier digit d'un code confidentiel saisi, les appuis suivants peuvent être plus brefs. Ce premier mode de réalisation permet ainsi une utilisation optimale d'un clavier virtuel tant pour un utilisateur malvoyant que pour un utilisateur non malvoyant, le fait d'allonger la temporisation de validation d'appui pour le premier appui ne ralentissant pas la saisie globale d'un code confidentiel par exemple.

Selon un deuxième mode de réalisation particulier, pouvant être combiné avec le premier mode de réalisation décrit ci-dessus, le paramètre de variation de la temporisation permet de gérer de manière particulière des touches situées dans des zones prédéterminées de l'écran, comme les touches de fonctions par exemple, et plus particulièrement les touches de correction ou d'annulation.

Ainsi, une temporisation plus longue pour les touches de fonctions telles que la touche d'annulation ou de correction sur un clavier virtuel, permet d'éviter des fausses détection de ces touches, en obligeant l'utilisateur à laisser volontairement plus longtemps son doigt sur l'écran lorsqu'il souhaite corriger ou annuler une saisie. Par exemple, cette variante évite à un utilisateur de saisir à nouveau son code lorsqu'il a malencontreusement appuyé sur la touche annulation au lieu de la touche validation.

En particulier, l'étape de configuration de la temporisation de validation d'appui est déclenchée par une sélection d'un mode de saisie prédéterminé, dit mode de saisie à temporisation variable, pour le terminal électronique.

Ainsi, selon ce mode de réalisation particulier de l'invention, la configuration de la temporisation variable est déclenchée par la sélection d'un mode de fonctionnement spécifique du terminal électronique, appelé mode de saisie à temporisation variable.

En effet, dans un fonctionnement dit « normal », ou « classique », la temporisation de validation d'un appui est fixée à une valeur prédéterminée, par exemple 0,4 seconde, quel que soit l'appui, c'est-à-dire quel que soit le rang de l'appui dans une série de plusieurs appuis, ou quelle que soit la zone de l'appui sur l'écran...

Ainsi, un terminal équipé d'un procédé de gestion de la saisie de données selon l'invention permet de s'adapter à l'utilisateur, qu'il soit malvoyant ou non, en offrant une ergonomie optimale pour les deux types d'utilisateurs.

En effet, la sélection du mode de saisie à temporisation variable permet à un utilisateur malvoyant une utilisation optimale du terminal, notamment pour la saisie de son code confidentiel, alors que le mode de fonctionnement classique permet de ne pas « pénaliser » un utilisateur non malvoyant en fixant une temporisation courte de validation d'un appui et donc en ne ralentissant pas la saisie d'un code confidentiel par exemple, contrairement aux solutions de l'art antérieur.

Par exemple, la sélection d'un mode de saisie à temporisation variable appartient au groupe comprenant :
- une sélection manuelle par au moins un utilisateur du terminal électronique ;
- une sélection automatique par une lecture, par ledit terminal électronique, d'au moins une information prédéterminée relative à au moins un utilisateur dudit terminal électronique.

Selon une première variante de réalisation, la sélection du mode de saisie à temporisation variable peut être effectuée manuellement, par un utilisateur du terminal électronique.

Ainsi, selon un premier exemple, si le terminal est un terminal de paiement électronique d'un commerçant, et que l'utilisateur s'identifie comme étant malvoyant auprès du commerçant, ce dernier peut sélectionner manuellement le mode de saisie à temporisation variable selon le premier critère de variation décrit ci-dessus (temporisation plus longue pour le premier appui que les appuis suivants d'une série). Une fois le mode de saisie à temporisation variable sélectionné, l'étape de configuration de la temporisation est mise en oeuvre et la variabilité de la temporisation est rendue effective, selon le critère de variation prédéterminé choisi.

Selon un autre exemple de la première variante de réalisation, la sélection manuelle du mode de saisie à temporisation variable peut être effectuée par le commerçant, suivant le deuxième critère de variation décrit ci-dessus (temporisation plus longue pour les touches de fonctions), par exemple avant que l'utilisateur ne saisisse son code confidentiel (que l'utilisateur soit malvoyant ou non). En effet, le terminal du commerçant pouvant servir à plusieurs utilisations (par exemple dans le cas où le terminal est le smartphone du commerçant), le commerçant peut sélectionner le mode de fonctionnement selon l'utilisation faite du terminal : fonctionnement en mode de saisie à temporisation variable lorsque le terminal sert à effectuer une opération de paiement, et fonctionnement « classique » dans les autres utilisations d'un smartphone.

Selon une deuxième variante de réalisation, toujours dans le cas où le terminal électronique est un terminal de paiement électronique d'un commerçant, c'est la lecture, par le terminal électronique, d'une information prédéterminée relative à un utilisateur du terminal de paiement électronique, qui sélectionne automatiquement le mode de fonctionnement du terminal.

Par exemple, l'information prédéterminée appartient au groupe comprenant :
- une information prédéterminée d'une carte à mémoire dudit au moins un utilisateur dudit terminal électronique ;
- une information prédéterminée présente sur un serveur distant et relative à une carte à mémoire dudit au moins un utilisateur dudit terminal électronique.

Ainsi, selon un premier exemple de réalisation, c'est la lecture d'une information prédéterminée d'une carte de l'utilisateur (par exemple une carte de paiement insérée dans le terminal de paiement, ou bien une carte de paiement dont la bande magnétique est lue par le terminal de paiement) qui sélectionne automatiquement le mode de fonctionnement du terminal. Par exemple, un utilisateur malvoyant peut disposer d'une carte préconfigurée permettant de sélectionner le mode de saisie à temporisation variable, alors qu'une carte non préconfigurée d'un utilisateur non malvoyant n'a pas d'effet sur le mode de fonctionnement du terminal (qui reste dans un mode de fonctionnement « classique » par défaut, avec une temporisation identique pour tous les appuis).

Selon ce mode de réalisation particulier de l'invention, la sélection automatique comprend les sous-étapes suivantes :
- une étape d'insertion de la carte à mémoire ;
- une étape de lecture d'au moins une donnée de la carte à mémoire ;
- une étape de détection, parmi les données de la carte à mémoire, d'au moins une information prédéterminée d'authentification destinée à sélectionner le mode de saisie à temporisation variable.

Ainsi, dans le cas où l'insertion d'une carte permet de sélectionner automatiquement le mode de fonctionnement du terminal, c'est en fait la lecture des données de la carte et plus particulièrement la détection d'une information d'authentification prédéterminée qui permet la sélection du mode de saisie à temporisation variable.

Selon un deuxième exemple de cette deuxième variante, la sélection automatique comprend les sous-étapes suivantes :
- une étape d'insertion de la carte à mémoire ;
- une étape de communication entre le terminal électronique et le serveur distant ;
- une étape de lecture d'au moins une donnée, sur le serveur distant, relative à la carte à mémoire et/ou à l'utilisateur, la donnée correspondant à au moins une information prédéterminée d'authentification destinée à sélectionner le mode de saisie à temporisation variable.

Ainsi, c'est la lecture d'une information prédéterminée sur un serveur distant, par exemple le serveur de l'organisme bancaire relatif au compte de l'utilisateur qui sélectionne automatiquement le mode de fonctionnement du terminal, ou un serveur intermédiaire destiné à stocker des informations d'authentification d'utilisateurs comme étant malvoyants. Pour ce faire, lorsque l'utilisateur insère sa carte dans le terminal de paiement électronique, une communication est mise en oeuvre entre le terminal de paiement électronique et le serveur distant, de façon à obtenir, si elle existe, une information d'authentification de l'utilisateur comme étant une personne malvoyante, souhaitant bénéficier du mode de saisie à temporisation variable.

L'invention concerne également un module de gestion de la saisie de données par appuis sur une surface tactile d'un terminal électronique, mettant en oeuvre au moins des moyens de temporisation visant à ne valider un appui que si la durée de cet appui dépasse un seuil prédéterminé, dite temporisation de validation d'appui, et comprenant :
- des moyens de configuration de la temporisation de validation d'appui, délivrant une temporisation de validation d'appui variable selon au moins un paramètre de variation prédéterminé ;
- des moyens de gestion d'une pluralité d'appuis sur la surface tactile du terminal électronique en tenant compte de la temporisation de validation d'appui variable configurée.

Le module de gestion est notamment apte à mettre en oeuvre les étapes du procédé de gestion décrit précédemment, selon ses différents modes de réalisation.

L'invention concerne également un terminal électronique présentant une surface tactile et un module de gestion de la saisie de données par appuis sur la surface tactile tel que décrit précédemment.

L'invention concerne également un programme d'ordinateur téléchargeable depuis un réseau de communication et/ou stocké sur un support lisible par ordinateur et/ou exécutable par un processeur, comprenant des instructions de code de programme pour l'exécution du procédé tel que décrit précédemment, selon ses différents modes de réalisation, lorsqu'il est exécuté par un processeur.

L'invention concerne également un médium de stockage lisible par ordinateur et non transitoire, stockant un programme d'ordinateur comprenant un jeu d'instructions exécutables par un ordinateur ou un processeur pour mettre en oeuvre le procédé tel que décrit précédemment, selon ses différents modes de réalisation.

### 4 LISTE DES FIGURES

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :
- la figure 1 présente les principales étapes du procédé de gestion selon un mode de réalisation particulier de l'invention ;
- les figures 2a et 2b présentent deux exemples de réalisation de l'invention ;
- la figure 3 présente un exemple simplifié de module de gestion selon un mode de réalisation de l'invention.

### 5 DESCRIPTION DETAILLEE DE L'INVENTION

### 5.1 Principe général

Le principe général de l'invention consiste à fournir une technique permettant d'adapter le mode de gestion de la saisie de données via un écran tactile d'un terminal électronique à une utilisation particulière telle qu'une utilisation par une personne malvoyante par exemple, tout en permettant également un fonctionnement optimal pour un utilisateur non malvoyant.

L'invention, selon ses différents modes de réalisation, s'applique plus particulièrement aux terminaux de paiement électroniques présentant un clavier virtuel affiché sous un écran tactile permettant la saisie de données par un utilisateur.

Le principe général de l'invention est basé sur la mise en oeuvre d'une temporisation de validation d'appui, c'est-à-dire une temporisation permettant de valider l'appui comme une saisie de donnée, variable en fonction de l'appui courant, la variabilité de la temporisation dépendant d'au moins un paramètre de variation prédéterminé.

Par exemple, ce paramètre de variation permet de mettre en oeuvre une temporisation de validation d'appui plus longue pour le premier appui d'une série d'appuis (par exemple le premier digit d'un code PIN) ou une temporisation plus longue pour un appui sur une zone spécifique prédéterminée de l'écran tactile.

De plus, cette mise en oeuvre d'une temporisation variable peut être déclenchée par une sélection, manuelle ou automatique, d'un mode de fonctionnement spécifique du terminal de paiement électronique.

### 5.2 Description d'un mode de réalisation

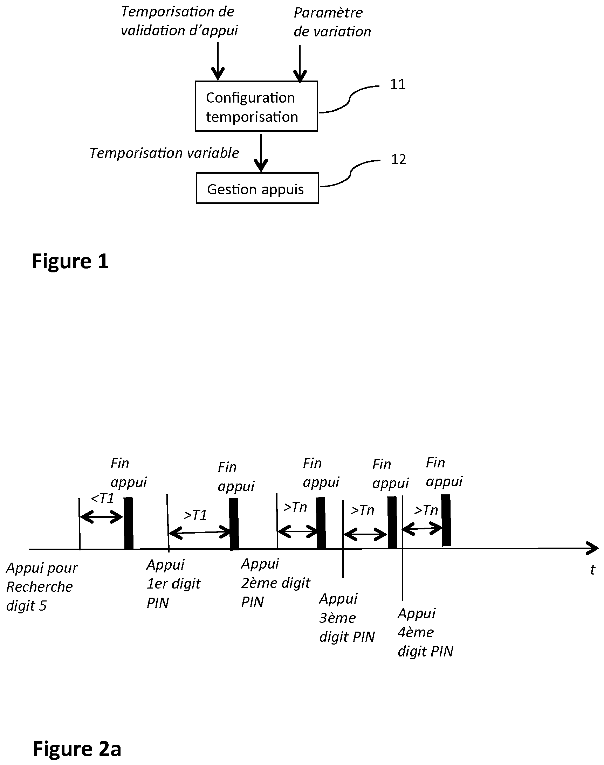

On présente maintenant, en relation avec la figure 1, les principales étapes du procédé de gestion de la saisie de données par appuis sur une surface tactile, selon un mode de réalisation particulier de l'invention.

Selon ce mode de réalisation, une première étape 11 de configuration de la temporisation de validation d'appui, classiquement d'une valeur constante quel que soit l'appui sur l'écran tactile, prend en compte un paramètre de variation prédéterminé, pour délivrer une temporisation variable.

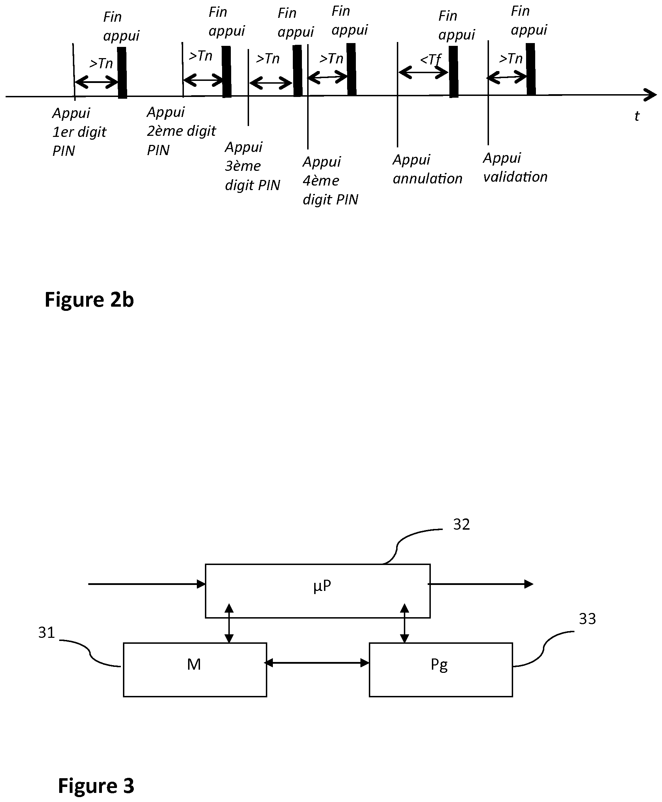

Selon différentes variantes de réalisation, illustrées par exemple en figures 2a et 2b décrites plus en détails ci-après, le paramètre de variation peut configurer une valeur de temporisation plus longue pour le premier appui d'une série de plusieurs appuis (figure 2a), ou une valeur de temporisation plus longue pour un appui sur une zone spécifique prédéterminée de l'écran tactile (figure 2b).

Une étape 12 de gestion proprement dite des appuis effectués par un utilisateur sur l'écran tactile du terminal électronique est ensuite mise en oeuvre, en tenant compte de la temporisation variable configurée lors de l'étape 11.

Ainsi, le mode de gestion de saisie de données par appuis sur l'écran tactile d'un terminal électronique est modifié, de façon à s'adapter à une utilisation particulière souhaitée pour ce terminal électronique.

Par ailleurs, la mise en oeuvre du procédé de l'invention, et plus particulièrement l'étape de configuration de la temporisation, est déclenchée par la sélection, manuelle ou automatique, d'un mode de fonctionnement spécifique du terminal électronique.

Ainsi, selon une première variante de réalisation, un utilisateur du terminal électronique sélectionne, de façon manuelle, par exemple en validant un choix affiché par le terminal ou en saisissant des données spécifiques (suite particulière de digits ou de touches) sur le terminal, un mode de fonctionnement spécifique, différent du mode de fonctionnement classique, pour le terminal.

Selon une deuxième variante de réalisation, la sélection d'un mode de fonctionnement spécifique du terminal est effectuée automatiquement, par exemple par la lecture d'une donnée prédéterminée d'une carte à mémoire d'un utilisateur du terminal, par exemple la carte de paiement préconfigurée d'un utilisateur malvoyant, ou une donnée stockée sur un serveur distant et relative à la carte de paiement préconfigurée d'un utilisateur malvoyant.

Différents exemples de mode de fonctionnement spécifique du terminal sont décrits ci-après.

### 5.3 Description d'un premier exemple de réalisation

Un premier exemple particulier de réalisation de l'invention, illustré en figure 2a, permet d'adapter le fonctionnement d'un terminal de paiement électronique présentant un écran tactile pour une utilisation optimale à la fois par un utilisateur malvoyant et par un utilisateur non malvoyant.

Selon cet exemple de réalisation, le terminal de paiement électronique présente, selon l'art antérieur, un clavier virtuel affiché sous un écran tactile, dont la surface présente un relief permettant de repérer le digit 5, par exemple un point en creux ou en saillie. Cette caractéristique permet à un utilisateur malvoyant de se repérer sur l'écran tactile, en identifiant la position du digit 5 et, par déduction, la position des autres digits. De cette manière, un utilisateur malvoyant peut par exemple saisir son code confidentiel, ainsi que le valider, en toute sécurité car sans l'aide d'un tiers.

Comme déjà indiqué précédemment, le principal inconvénient d'un tel terminal de l'art antérieur réside dans le fait que le digit 5 peut être considéré comme une saisie de donnée, par exemple comme le premier digit d'un code confidentiel, lorsque l'utilisateur malvoyant déplace son doigt sur l'écran à la recherche du relief repérant ce digit 5. En effet, le temps que l'utilisateur repère le relief, il laisse son doigt sur l'écran pendant une durée qui peut être suffisante pour qu'une donnée soit considérée comme saisie. Cette « fausse » saisie peut ensuite engendre une erreur dans la saisie du code confidentiel et fortement pénaliser l'utilisateur.

Selon ce mode de réalisation de l'invention, il est donc prévu qu'une temporisation de validation d'appui variable soit configurée, en fonction d'un paramètre de variation prédéterminé.

Dans cet exemple, ce paramètre consiste à prévoir une longueur de temporisation plus grande, notée *T1*, pour le premier appui d'une série de plusieurs appuis, permettant ainsi d'éviter une fausse saisie du digit 5, au moment où l'utilisateur cherche à détecter ce digit. Cette temporisation *T1* peut être par exemple d'une seconde, alors que la temporisation de validation pour les appuis suivants, notée *Tn,* peut être de 0,4 seconde.

En effet, concrètement, on considère que l'utilisateur ne laisse pas son doigt plus d'une seconde sur le digit 5, lorsqu'il cherche le relief permettant de le repérer. En laissant en revanche volontairement son doigt plus d'une seconde sur le premier digit du code confidentiel qu'il saisit, l'appui correspondant au premier digit est donc supérieur à la temporisation *T1* et la saisie du premier digit est donc validée. L'utilisateur peut ensuite laisser son doigt moins longtemps, tout en excédant la temporisation *Tn* de 0,4 seconde, pour que les appuis suivants, correspondant aux digits suivants de son code confidentiel, soient validés. Par exemple, un signal sonore de confirmation de validation d'un appui peut être émis lorsque la temporisation correspondante est effectivement dépassée, permettant ainsi à un utilisateur malvoyant d'être assuré de la saisie d'un digit pour passer à la saisie du digit suivant de son code confidentiel.

Le procédé selon cet exemple de réalisation de l'invention permet donc à un utilisateur malvoyant d'utiliser de manière optimale et sûre un terminal de paiement électronique présentant un clavier virtuel et un écran tactile.

De plus, cet exemple permet également de ne pas pénaliser un utilisateur non malvoyant, en ne ralentissant pas toutes les saisies d'un code confidentiel, mais seulement la saisie du premier digit, contrairement aux techniques de l'art antérieur qui prévoient une temporisation plus longue pour toutes les saisies.

Selon une première variante de mise en oeuvre de cet exemple, le terminal de paiement électronique prévoit qu'un mode spécifique, noté mode de saisie à temporisation variable, peut être sélectionné manuellement, par un utilisateur du terminal, le commerçant ou le client par exemple.

Dans ce cas, un message peut être affiché sur le terminal, avant le début de la transaction ou opération de paiement, pour le choix du mode de fonctionnement, « classique » ou à temporisation variable. Par exemple, si le client indique au commerçant qu'il est malvoyant, le commerçant peut répondre au message affiché en validant le mode de saisie à temporisation variable, avant de laisser le client utiliser le terminal de paiement électronique pour la conduite de l'opération de paiement.

Le commerçant peut également saisir un code prédéterminé, ou une combinaison de touches prédéterminée, si le client lui indique qu'il est malvoyant et qu'il souhaite bénéficier du mode de saisie à temporisation variable.

La configuration de la temporisation est ensuite mise en oeuvre, selon les différents modes de réalisation de l'invention décrits ci-dessus.

Il est prévu, dans un mode de réalisation particulier, que la durée de la temporisation pour le premier appui puisse être configurable par l'utilisateur, par exemple pour tenir compte du fait que l'utilisateur est malvoyant ou non-voyant (dans ce cas il peut être utile de prévoir une temporisation plus longue pour le premier appui).

Par ailleurs, une fois la transaction effectuée en mode de saisie à temporisation variable, le terminal peut revenir automatiquement à un mode de fonctionnement « classique » par défaut, ou bien le mode de fonctionnement, « classique » ou de saisie à temporisation variable, doit être sélectionnée manuellement au début de chaque nouvelle opération de paiement.

Selon une deuxième variante de mise en oeuvre de cet exemple, le mode spécifique de fonctionnement du terminal (mode de saisie à temporisation variable) peut être sélectionné automatiquement, via la lecture d'une donnée spécifique d'une carte à mémoire préconfigurée d'un utilisateur du terminal, le commerçant ou le client par exemple, ou la lecture d'une donnée spécifique sur un serveur distant, relatif à la carte à mémoire d'un utilisateur du terminal, ou relatif au compte bancaire de cet utilisateur. Ce serveur distant est par exemple le serveur de l'organisme bancaire du compte de l'utilisateur, ou un serveur intermédiaire destiné à stocker des informations d'authentification d'utilisateurs comme étant malvoyants.

Ainsi, lorsqu'un client malvoyant, muni d'une carte de paiement préconfigurée pour permettre la sélection d'un mode de fonctionnement spécifique, insère sa carte dans le terminal de paiement électronique (ou passe sa carte dans un lecteur de bande magnétique ou devant un lecteur sans contact), le lecteur de carte détecte, parmi les données de la carte, une information d'authentification permettant d'authentifier l'utilisateur comme étant malvoyant et souhaitant bénéficier du mode de saisie à temporisation variable. Par exemple, la carte de paiement de l'utilisateur est préconfigurée avec une clé spéciale qui lui permet de s'authentifier auprès du terminal pour lui prouver que le porteur de la carte est malvoyant.

Le terminal détecte donc automatiquement une requête de changement de mode de fonctionnement et met ensuite en oeuvre les étapes du procédé selon les différents modes de réalisation de l'invention décrits ci-dessus.

Par ailleurs, une fois la transaction effectuée en mode de saisie à temporisation variable, le terminal revient automatiquement à un mode de fonctionnement « classique » par défaut.

### 5.4 Description d'un deuxième exemple de réalisation

Un deuxième exemple particulier de réalisation de l'invention, illustré en figure 2b, permet d'adapter le fonctionnement d'un terminal de communication électronique (par exemple un smartphone, une tablette ...) présentant un écran tactile et pouvant mettre en oeuvre des opérations de paiement, pour toutes les circonstances d'utilisation de ce terminal.

Ainsi, on considère par exemple un commerçant qui utilise son smartphone pour les opérations de paiement de ses clients, en plus des fonctionnalités de communication classiques d'un smartphone.

Le commerçant peut souhaiter faciliter l'utilisation de son smartphone pour ses clients, en particulier un client qui n'aurait pas un usage fréquent d'un écran tactile pour saisir son code confidentiel par exemple. Dans ce cas, il est possible qu'un tel utilisateur soit confronté fréquemment à des saisies non souhaitées de certaines touches, par exemple en laissant trop longtemps son doigt sur l'écran après une saisie, ou en n'étant pas assez précis lorsqu'il pose son doigt sur l'écran pour une saisie d'un digit ou d'une touche de fonction.

En particulier, il est préférable que les touches de fonction de correction ou d'annulation des saisies précédentes correspondant aux digits d'un code confidentiel ne soient pas validées par erreur.

Pour ce faire, il est donc prévu qu'une temporisation de validation d'appui variable soit configurée, en fonction d'un paramètre de variation prédéterminé consistant à prévoir une temporisation de validation plus longue, notée *Tf,* en fonction de la zone de l'appui sur l'écran, et plus particulièrement lorsque la zone de l'appui correspond à une touche de fonction telle que la correction ou l'annulation des saisies précédentes.

Ainsi, selon cet exemple, lorsqu'un utilisateur souhaite corriger, ou annuler, une ou plusieurs saisies précédentes, il doit volontairement laisser son doigt sur la touche en question pendant une durée supérieure à la temporisation *Tf,* par exemple d'une seconde, alors que la temporisation *Tn,* prévue pour les autres appuis, est de 0,4 seconde par exemple.

Le procédé selon cet exemple de réalisation de l'invention permet donc à un utilisateur d'éviter des erreurs de saisie nécessitant à nouveau la saisie de son code, en allongeant la temporisation de validation d'un appui correspondant à certaines touches de fonction telles que la correction ou l'annulation.

De plus, cet exemple permet de ne pas pénaliser la saisie du code confidentiel, en ne ralentissant pas cette saisie du fait que la temporisation pour les appuis correspondant à des digits reste courte, tout en évitant à un utilisateur « maladroit » d'annuler la saisie de son code par un appui non souhaité sur la touche de fonction annulation par exemple.

### 5.5 Description d'un exemple simplifié de module de gestion

La figure 3 illustre une architecture simplifiée d'un module de gestion de la saisie de données par appuis sur une surface tactile d'un terminal électronique, comprenant une mémoire 31 constituée d'une mémoire tampon, une unité de traitement 32, équipée par exemple d'un microprocesseur, et pilotée par le programme d'ordinateur 33, mettant en oeuvre un procédé de gestion de la saisie de données par appuis sur une surface tactile d'un terminal électronique selon les différents modes de réalisation de l'invention.

À l'initialisation, c'est-à-dire à la mise sous tension du terminal électronique au sein duquel le module de gestion est intégré, les instructions de code du programme d'ordinateur 33 sont par exemple chargées dans une mémoire avant d'être exécutées par le processeur de l'unité de traitement 32.

Ensuite, par exemple au début d'une opération de paiement, l'unité de traitement 32 reçoit en entrée au moins un paramètre de variation pour la configuration de la temporisation de validation d'appui. Le microprocesseur de l'unité de traitement 32 met en oeuvre les étapes du procédé de gestion, selon les instructions du programme d'ordinateur 33 pour configurer la temporisation variable de validation d'appui et gérer les appuis sur l'écran tactile du terminal électronique.

Pour cela, le module de gestion comprend, outre la mémoire tampon 31, des moyens de configuration de la temporisation de validation d'appui, délivrant une temporisation de validation d'appui variable selon au moins un paramètre de variation prédéterminé et des moyens de gestion d'une pluralité d'appuis sur la surface tactile du terminal électronique en tenant compte de la temporisation de validation d'appui variable configurée.

## Revendications

1. Procédé de gestion de la saisie de données par appuis sur une surface tactile d'un terminal électronique, ledit procédé mettant en oeuvre au moins une temporisation visant à ne valider un appui que si la durée de cet appui dépasse un seuil prédéterminé, dite temporisation de validation d'appui,
et comprenant les étapes suivantes :
• une étape de configuration de ladite temporisation de validation d'appui, délivrant une temporisation de validation d'appui variable selon au moins un paramètre de variation prédéterminé et du rang de l'appui dans une série de plusieurs d'appuis ;
• une étape de gestion d'une pluralité d'appuis sur ladite surface tactile dudit terminal électronique en tenant compte de ladite temporisation de validation d'appui variable configurée,
**caractérisé en ce que** ladite temporisation de validation d'appui est plus longue pour le premier appui de ladite série de plusieurs appuis.

2. Procédé de gestion de la saisie de données par appuis sur une surface tactile d'un terminal électronique selon la revendication 1, **caractérisé en ce que** ladite étape de configuration de ladite temporisation de validation d'appui est déclenchée par une sélection d'un mode de saisie prédéterminé, dit mode de saisie à temporisation variable, pour ledit terminal électronique.

3. Procédé de gestion de la saisie de données par appuis sur une surface tactile d'un terminal électronique selon la revendication 2, **caractérisé en ce que** ladite sélection d'un mode de saisie à temporisation variable appartient au groupe comprenant :
• une sélection manuelle par au moins un utilisateur dudit terminal électronique ;
• une sélection automatique par une lecture, par ledit terminal électronique, d'au moins une information prédéterminée relative à au moins un utilisateur dudit terminal électronique.

4. Procédé de gestion de la saisie de données par appuis sur une surface tactile d'un terminal électronique selon la revendication 3, **caractérisé en ce que** ladite information prédéterminée appartient au groupe comprenant :
• une information prédéterminée d'une carte à mémoire dudit au moins un utilisateur dudit terminal électronique ;
• une information prédéterminée présente sur un serveur distant et relative à une carte à mémoire dudit au moins un utilisateur dudit terminal électronique.

5. Procédé de gestion de la saisie de données par appuis sur une surface tactile d'un terminal électronique selon la revendication 3, **caractérisé en ce que** ladite sélection automatique comprend les sous-étapes suivantes :
• une étape d'insertion de ladite carte à mémoire ;
• une étape de lecture d'au moins une donnée de ladite carte à mémoire ;
• une étape de détection, parmi ladite au moins une donnée de ladite carte à mémoire, d'au moins une information prédéterminée d'authentification destinée à sélectionner le mode de saisie à temporisation variable.

6. Procédé de gestion de la saisie de données par appuis sur une surface tactile d'un terminal électronique selon la revendication 3, **caractérisé en ce que** ladite sélection automatique comprend les sous-étapes suivantes :
• une étape d'insertion de ladite carte à mémoire ;
• une étape de communication entre ledit terminal électronique et ledit serveur distant ;
• une étape de lecture d'au moins une donnée, sur ledit serveur distant, relative à ladite carte à mémoire et/ou audit utilisateur, ladite donnée correspondant à au moins une information prédéterminée d'authentification destinée à sélectionner le mode de saisie à temporisation variable.

7. Module de gestion de la saisie de données par appuis sur une surface tactile d'un terminal électronique, ledit module mettant en oeuvre au moins des moyens de temporisation visant à ne valider un appui que si la durée de cet appui dépasse un seuil prédéterminé, dite temporisation de validation d'appui,
et comprenant :
• des moyens de configuration de ladite temporisation de validation d'appui, délivrant une temporisation de validation d'appui variable selon au moins un paramètre de variation prédéterminé et du rang de l'appui dans une série de plusieurs d'appuis ;
• des moyens de gestion d'une pluralité d'appuis sur ladite surface tactile dudit terminal électronique en tenant compte de ladite temporisation de validation d'appui variable configurée.
**caractérisé en ce que** ladite temporisation de validation d'appui est plus longue pour le premier appui de ladite série de plusieurs appuis.

8. Terminal électronique présentant une surface tactile et un module de gestion de la saisie de données par appuis sur ladite surface tactile selon la revendication 7.

9. Programme d'ordinateur téléchargeable depuis un réseau de communication et/ou stocké sur un support lisible par ordinateur et/ou exécutable par un processeur, **caractérisé en ce qu'**il comprend des instructions de code de programme pour l'exécution du procédé selon l'une quelconque des revendications 1 à 6, lorsqu'il est exécuté par un processeur.

10. Médium de stockage lisible par ordinateur et non transitoire, stockant un programme d'ordinateur comprenant un jeu d'instructions exécutables par un ordinateur ou un processeur pour mettre en oeuvre le procédé selon l'une quelconque des revendications 1 à 6.

## Patentansprüche

1. Verfahren zur Steuerung der Datenerfassung durch Drücken auf eine berührungsempfindliche Oberfläche eines elektronischen Endgeräts, wobei das Verfahren mindestens eine Verzögerung umsetzt, die darauf abzielt, ein Drücken nur dann zu validieren, wenn die Dauer dieses Drückens einen vorbestimmten Schwellenwert überschreitet, die Validierungsverzögerung des Drückens genannt wird,
und umfassend die folgenden Schritte:
• einen Schritt des Konfigurierens der Validierungsverzögerung des Drückens, der eine variable Validierungsverzögerung des Drückens bereitstellt, gemäß mindestens einem vorbestimmten Variationsparameter und der Rangfolge des Drückens in einer Reihe von mehrfachem Drücken,
• einen Schritt der Steuerung von mehrfachem Drücken auf die berührungsempfindliche Oberfläche des elektronischen Endgeräts unter Berücksichtigung der konfigurierten variablen Validierungsverzögerung des Drückens,
**dadurch gekennzeichnet, dass** die Validierungsverzögerung des Drückens länger ist als das erste Drücken der Reihe von mehrfachem Drücken ist.

2. Verfahren zur Steuerung der Datenerfassung durch Drücken auf eine berührungsempfindliche Oberfläche eines elektronischen Endgeräts nach Anspruch 1, **dadurch gekennzeichnet, dass** der Schritt des Konfigurierens der Validierungsverzögerung des Drückens durch ein Auswählen eines vorbestimmten Eingabemodus, der Eingabemodus mit variabler Verzögerung genannt wird, für das elektronische Endgerät ausgelöst wird.

3. Verfahren zur Steuerung der Datenerfassung durch Drücken auf eine berührungsempfindliche Oberfläche eines elektronischen Endgeräts nach Anspruch 2, **dadurch gekennzeichnet, dass** das Auswählen eines Eingabemodus mit variabler Verzögerung zu der Gruppe gehört, umfassend:
• ein manuelles Auswählen durch mindestens einen Benutzer des elektronischen Endgeräts,
• ein automatisches Auswählen durch Lesen durch das elektronische Endgerät von mindestens einer vorbestimmten Information in Bezug auf mindestens einen Benutzer des elektronischen Endgeräts.

4. Verfahren zur Steuerung der Datenerfassung durch Drücken auf eine berührungsempfindliche Oberfläche eines elektronischen Endgeräts nach Anspruch 3, **dadurch gekennzeichnet, dass** die Information zu der Gruppe gehört, umfassend:
• eine vorbestimmte Information einer Speicherkarte von dem mindestens einen Benutzer des elektronischen Endgeräts,
• eine vorbestimmte Information, die auf einem Remote-Server vorhanden ist und sich auf eine Speicherkarte von dem mindestens einen Benutzer des elektronischen Endgeräts bezieht.

5. Verfahren zur Steuerung der Datenerfassung durch Drücken auf eine berührungsempfindliche Oberfläche eines elektronischen Endgeräts nach Anspruch 3, **dadurch gekennzeichnet, dass** das automatische Auswählen die folgenden Unterschritte aufweist:
• einen Schritt des Einführens der Speicherkarte,
• einen Schritt des Lesens von mindestens einem Datum der Speicherkarte,
• einen Schritt des Erfassens unter dem mindestens einen Datum der Speicherkarte von mindestens einer vorbestimmten Authentifizierungsinformation, die dazu bestimmt ist, den Eingabemodus mit variabler Verzögerung auszuwählen.

6. Verfahren zur Steuerung der Datenerfassung durch Drücken auf eine berührungsempfindliche Oberfläche eines elektronischen Endgeräts nach Anspruch 3, **dadurch gekennzeichnet, dass** das automatische Auswählen die folgenden Unterschritte aufweist:
• einen Schritt des Einführens der Speicherkarte,
• einen Schritt der Kommunikation zwischen dem elektronischen Endgerät und dem Remote-Server,
• einen Schritt des Lesens von mindestens einem Datum auf dem Remote-Server in Bezug auf die Speicherkarte und/oder den Benutzer, wobei das Datum mindestens einer vorbestimmten Authentifizierungsinformation entspricht, die dazu bestimmt ist, den Eingabemodus mit variabler Verzögerung auszuwählen.

7. Modul zur Steuerung der Datenerfassung durch Drücken auf eine berührungsempfindliche Oberfläche eines elektronischen Endgeräts, wobei das Modul mindestens Verzögerungsmittel einsetzt, die darauf abzielen, ein Drücken nur dann zu validieren, wenn die Dauer dieses Drückens einen vorbestimmten Schwellenwert überschreitet, die Validierungsverzögerung des Drückens genannt wird,
und umfassend:
• Mittel zum Konfigurieren der Validierungsverzögerung des Drückens, die eine variable Validierungsverzögerung des Drückens bereitstellen, gemäß mindestens einem vorbestimmten Variationsparameter und der Rangfolge des Drückens in einer Reihe von mehrfachem Drücken,
• Mittel zur Steuerung von mehrfachem Drücken auf die berührungsempfindliche Oberfläche des elektronischen Endgeräts unter Berücksichtigung der konfigurierten variablen Validierungsverzögerung des Drückens,
**dadurch gekennzeichnet, dass** die Validierungsverzögerung des Drückens länger ist als das erste Drücken der Reihe von mehrfachem Drücken.

8. Elektronisches Endgerät, das eine berührungsempfindliche Oberfläche und ein Modul zur Steuerung der Datenerfassung durch Drücken auf die berührungsempfindliche Oberfläche nach Anspruch 7 aufweist.

9. Computerprogramm, das von einem Kommunikationsnetz herunterladbar ist und/oder auf einem computerlesbaren Medium gespeichert ist und/oder von einem Prozessor ausgeführt werden kann, **dadurch gekennzeichnet, dass** es Programmcodebefehle zum Ausführen des Verfahrens nach einem der Ansprüche 1 bis 6 aufweist, wenn es von einem Prozessor ausgeführt wird.

10. Computerlesbares und nichtflüchtiges Speichermedium, das ein Computerprogramm speichert, das einen Satz von Befehlen aufweist, die durch einen Computer oder einen Prozessor ausgeführt werden können, um das Verfahren nach einem der Ansprüche 1 bis 6 auszuführen.

## Claims

1. Method for managing the entry of data by pressing on a touch surface of an electronic terminal, said method using at least one time delay aimed at validating a pressing only if the duration of this pressing exceeds a predetermined threshold, referred to as the pressing validation time delay,
and comprising the following steps:
- a step of configuring said pressing validation time delay, delivering a variable pressing validation time delay according to at least one predetermined variation parameter and the rank of the pressing in a series of several pressings;
- a step of managing a plurality of pressings on said touch surface of said electronic terminal, taking account of said variable pressing validation time delay configured,
**characterised in that** said pressing validation time delay is longer for the first pressing in a series of several pressings.

2. Method for managing the entry of data by pressing on a touch surface of an electronic terminal according to claim 1, **characterised in that** said step of configuring said pressing validation time delay is triggered by a selection of a predetermined entry mode, referred to as the variable time delay entry mode, for said electronic terminal.

3. Method for managing the entry of data by pressing on a touch surface of an electronic terminal according to claim 2, **characterised in that** said selection of a variable time delay entry mode belongs to the group comprising:
- manual selection by at least one user of the said electronic terminal,
- automatic selection by a reading, by said electronic terminal, of at least one predetermined item of information relating to at least one user of said electronic terminal.

4. Method for managing the entry of data by pressing on a touch surface of an electronic terminal according to claim 3, **characterised in that** said predetermined information belongs to the group comprising:
- predetermined information on a memory card of said at least one user of said electronic terminal;
- predetermined information present on a distant server and relating to a memory card of said at least one user of said electronic terminal.

5. Method for managing the entry of data by pressing on a touch surface of an electronic terminal according to claim 3, **characterised in that** said automatic selection comprises the following substeps:
- a step of inserting said memory card;
- a step of reading at least one data item on said memory card;
- a step of detecting, from said at least one data item on said memory card, at least one predetermined item of authentication information intended to select the variable time delay entry mode.

6. Method for managing the entry of data by pressing on a touch surface of an electronic terminal according to claim 3, **characterised in that** said automatic selection comprises the following substeps:
- a step of inserting said memory card;
- a step of communication between said electronic terminal and said distant server;
- a step of reading at least one data item, on said distant server, relating to said memory card and/or to said user, said data item corresponding to at least one predetermined item of authentication information intended to select the variable time delay entry mode.

7. Module for managing the entry of data by pressing on a touch surface of an electronic terminal, said module using at least time delay means aimed at validating a pressing only if the duration of this pressing exceeds a predetermined threshold, referred to as the pressing validation time delay,
and comprising:
- means for configuring said pressing validation time delay, delivering a variable pressing validation time delay according to at least one predetermined variation parameter and the rank of the pressing in a series of several pressings;
- means for managing a plurality of pressings on said touch surface of the electronic terminal, taking account of said variable pressing validation time delay configured,
**characterised in that** said pressing validation time delay is longer for the first pressing in a series of several pressings.

8. Electronic terminal having a touch surface and a module for managing the entry of data by pressing on said touch surface according to claim 7.

9. Computer program downloadable from a communication network and/or stored on a support that can be read by computer and/or executed by a processor, **characterised in that** it comprises program code instructions for executing the method according to any one of claims 1 to 6 when it is executed by a processor.

10. Storage medium that can be read by computer and is non-transient, storing a computer program comprising a set of instructions executable by a computer or a processor for implementing the method according to any one of claims 1 to 6.
